# FASCICULE DE BREVET EUROPEEN

(11) **EP 1 043 820 B1**
(45) Date de publication et mention de la délivrance du brevet: **07.11.2007**
(21) Numéro de dépôt: 00410021.0
(22) Date de dépôt: 07.03.2000
(51) Int. Cl.: H02B 1/21

(54) **Agencement de barres dans une cellule électrique, et cellule équipée d'un tel agencement de barres**
Sammelschienenanordnung in einem Schaltschrank und Schaltschrank mit solcher Sammelschienenanordnung
Busbar arrangement in an electrical cabinet and electrical cabinet having such busbar arrangement

(30) Priorité: 09.04.1999 FR 9904623
(43) Date de publication de la demande: 11.10.2000
(73) Titulaire: SCHNEIDER ELECTRIC INDUSTRIES SAS, 92500 Rueil-Malmaison (FR)
(72) Inventeur: Bouchet, Roger, 38050 Grenoble Cedex 09 (FR); Buet, Jacques, 38050 Grenoble Cedex 09 (FR); Carle, Pierre, 38050 Grenoble Cedex 09 (FR); Vollet, Philippe, 38050 Grenoble Cedex 09 (FR)
(74) Mandataire: Ritzenthaler, Jacques

(56) Documents cités:
- DE-U- 9 312 589
- FR-A- 2 126 913
- FR-A- 2 261 681

## Description

L'invention concerne un agencement de barres dans une armoire électrique comprenant un premier jeu de barres d'alimentation véhiculant une ou plusieurs phases, chaque phase comportant une ou plusieurs barres, un second jeu de barres s'étendant perpendiculairement aux barres du premier jeu de barres, lesdites barres du second jeu étant alignées dans un même plan et destinées à être raccordées électriquement aux appareils d'une unité de départ d'une cellule électrique, chacune des barres du premier jeu étant reliée électriquement à au moins une barre de même phase du second jeu de barres par l'intermédiaire d'une pièce de liaison. (Voir DE-U-9 312 589 et FR-A-2 261 681).

On connaît des cellules électriques incorporant de tels agencements de barres. De telles cellules comprennent principalement un jeu de barres horizontal d'alimentation et une unité fonctionnelle de départ, ladite unité fonctionnelle de départ comprenant un jeu de barres vertical, une platine de support et de branchement d'au moins un appareil électrique tel un disjoncteur et une interface de connexion à pinces d'embrochage, chaque pince étant destinée à enfourcher la barre correspondante.
On connaît principalement deux types d'agencements de barres dans une cellule. Dans les deux cas, le jeu de barres vertical est formé de plusieurs barres verticales parallèles situées au voisinage du fond de l'armoire et s'étendant parallèlement à la paroi de fond de l'armoire et perpendiculairement à la paroi inférieure de la cellule.
Dans un premier cas, le jeu de barres horizontal est constitué de barres horizontales parallèles entre elles s'étendant parallèlement à la face supérieure de l'armoire au dessus du jeu de barres vertical et perpendiculairement aux barres verticales. Selon cette réalisation, les barres étant disposées à plat parallèlement aux parois inférieure et supérieure de la cellule, le jeu de barres horizontal obstrue la partie supérieure de la cellule de sorte qu'il empêche le passage par le haut de la cellule des câbles de raccordement aval des appareils, lorsque ce raccordement doit être effectué par l'avant de la cellule. De plus dans ce cas, les liaisons des barres entre le jeu de barres horizontal et le jeu de barres vertical sont difficiles à réaliser. En outre, du fait de l'obstruction de la partie supérieure de la cellule, une ventilation suffisante de la cellule ne peut être obtenue.
Dans un second cas, le jeu de barres horizontal est disposé entre le jeu de barres vertical et la paroi de fond de la cellule, au niveau de l'extrémité supérieure du jeu de barres vertical. Dans ce cas, le jeu de barres horizontal utilise une hauteur d'armoire importante à l'arrière de cette dernière, ce qui rend plus difficile le passage des câbles de raccordement des appareils, par l'arrière de la cellule, lorsque ce mode de raccordement est choisi.

La présente invention résout ces problèmes et propose un agencement de barres particulièrement compacte ainsi qu'une armoire l'incorporant, permettant un raccordement aval des appareils aussi bien par l'avant que par l'arrière de la cellule.

A cette effet, la présente invention a pour objet un agencement de barres, cet agencement étant caractérisé en ce que les barres du premier jeu sont réparties de part et d'autre du plan vertical contenant le second jeu de barres en étant situées au voisinage de l'une des extrémités desdites barres du second jeu, les deux jeux de barres étant regroupés au voisinage de la paroi de fond de la cellule.

Selon une autre caractéristique, les barres situées d'un même côté du plan contenant les barres du second jeu, sont situées à plat dans un plan parallèle audit plan contenant le second jeu.

La présente invention a également pour objet une cellule électrique comprenant un agencement de barres comprenant les caractéristiques précédentes.

Les avantages et caractéristiques de l'invention ressortiront plus clairement de la description suivante d'un mode particulier de réalisation, donné à titre d'exemple non limitatif, et représenté aux dessins annexés sur lesquels :
La figure 1 est une vue en perspective d'une cellule électrique selon l'invention équipée d'un agencement de barres selon l'invention,

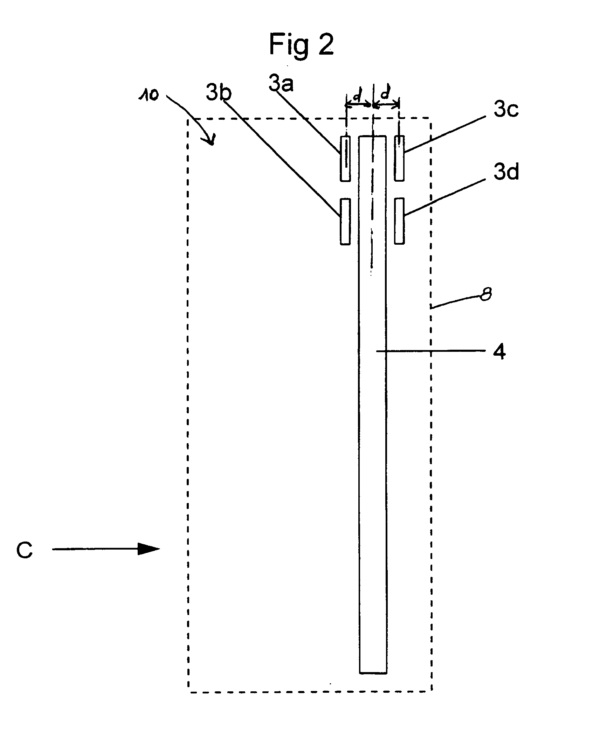

La figure 2 est une vue de côté schématique de ladite cellule,
La figure 3 est une vue partielle en perspective, illustrant les moyens de liaison des barres horizontales aux barres verticales.

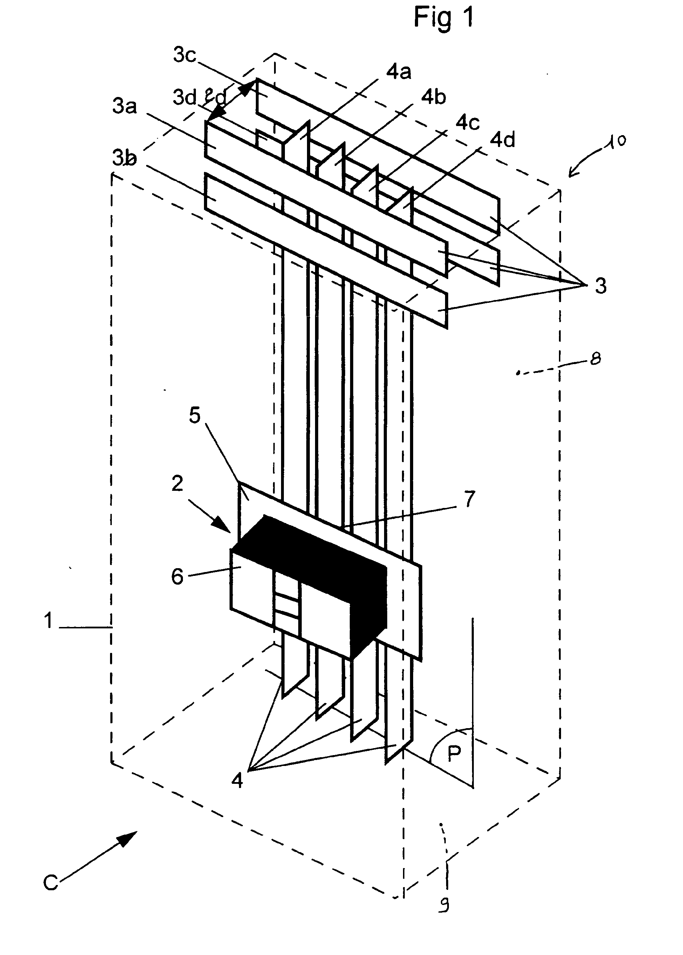

Sur la figure 1, on voit une cellule électrique basse tension C. Cette cellule électrique C renferme principalement, à l'intérieur d'une ossature métallique 1, une unité fonctionnelle de départ 2 et un jeu de barres multipolaire horizontal 3, dit premier jeu de barres. Cette unité fonctionnelle 2 comporte un jeu de barres vertical multipolaire 4, dit second jeu de barres, au moins une platine 5 de support et de branchement d'un ou plusieurs appareils électriques 6 tels un disjoncteur, et des moyens de connexion électrique 7 des appareils 6, à travers la platine 5, au jeu de barres 4. Les deux jeux de barres précitées comprennent des barres conductrices de section avantageusement rectangulaire (profilés,...).

Le jeu de barres vertical 4 est composé de quatre phases verticales 4a,4b,4c,4d alignées dans un même plan vertical P, les barres desdites phases s'étendant de chant dans des plans verticaux parallèles. Ces quatre phases 4a,4b,4c,4d véhiculent respectivement le neutre et trois courants de phase, l'installation étant du type triphasé avec neutre. Ces quatre phases 4a,4b,4c,4d peuvent comporter chacune une ou plusieurs barres.

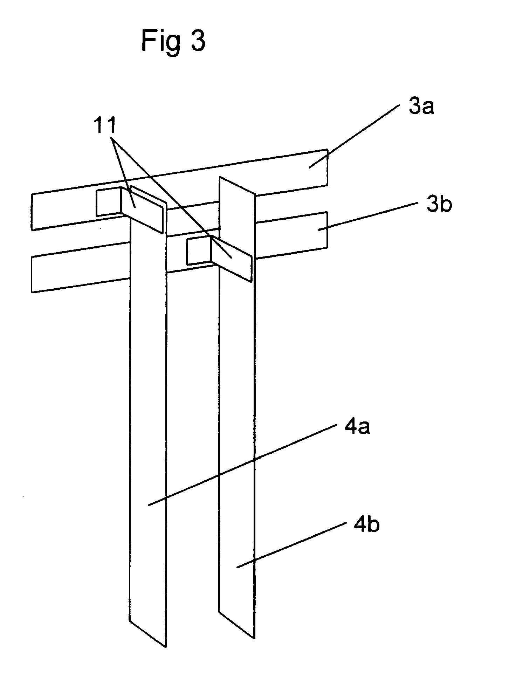

Le jeu de barres horizontal 3 est constitué de quatre phases horizontales 3a,3b,3c,3d s'étendant parallèlement à la paroi de fond 8 et à la paroi inférieure 9 de la cellule C et perpendiculairement aux phases verticales 4a, 4b, 4c, 4d. Conformément à l'invention, les phases 3a,3b,3c,3d du jeu de barres horizontal 3 sont réparties de part et d'autre du plan vertical P contenant le jeu de barre vertical 4. Cette répartition est réalisée de manière qu'il y ait sensiblement le même nombre de barres des deux côtés du plan P. Ainsi, le jeu de barres horizontal 3 comprend deux phases 3a,3b situées d'un côté dudit plan P et deux phases 3c,3d situées de l'autre côté dudit plan P. Les phases 3a,3b ou 3c,3d situées d'un même côté du plan P, sont situées dans un plan parallèle au plan P contenant le second jeu 4. La distance d séparant d'une part, le plan des barres du premier jeu 3, et d'autre part, le plan P contenant le second jeu 4 de barres, perpendiculairement audit plan P, est constante. Avantageusement, cette distance d est la même pour les deux ensembles des phases 3a,3b et 3c,3d situés des deux côtés du plan vertical P. Ces quatre phases 3a,3b,3c,3d peuvent comporter chacune une ou plusieurs barres.
Ainsi, les phases 3a,3b,3c,3d du premier jeu dit horizontal 3 sont disposées en carré autour du jeu de barres vertical 4 et regroupées ainsi à la partie supérieure 10 et au voisinage de la paroi de fond de la cellule C.
Chacune des barres des phases horizontales 3a,3b,3c,3d est reliée mécaniquement et électriquement à l'une des barres des phases du jeu de barres verticales 4a,4b,4c,4d au moyen d'une pièce de liaison 11 en forme d'équerre, de préférence en cuivre, tel qu'illustré sur la figure 3. Du fait que la distance d séparant les barres du jeu horizontal 3 du plan vertical précité P est constante, la liaison entre les barres horizontales 3a à 3d et les barres verticales 4a à 4d sera avantageusement réalisée avec la même pièce de base 11, par exemple des équerres.

Ainsi, il est possible de réaliser grâce à l'invention, une armoire électrique dans laquelle les liaisons entre le jeu de barres vertical et le jeu de barres horizontal sont optimisées du fait d'une part, du regroupement des différentes barres horizontales, réalisant en quelque sorte un compactage des dites barres et d'autre part, de la possibilité d'utiliser des pièces de liaison simples et identiques qui peuvent être préfabriquées.

Cette disposition des barres horizontales par rapport aux barres verticales présente un certain nombre d'autres avantages. L'un de ces avantages tient en ce que l'échauffement produit au niveau des barres horizontales est diminué par rapport aux solutions de l'art antérieur car cet échauffement est réparti de part et d'autre du plan contenant le jeu de barre vertical. Cette disposition en carré des barres horizontales crée en outre un effet de cheminée à la partie supérieure de la cellule permettant d'améliorer la ventilation.
En outre, la hauteur utile d'armoire utilisée est réduite par rapport au cas où toutes les barres horizontales sont disposées entre le jeu de barres vertical et la paroi de fond de la cellule.
De plus, cette disposition permet, lorsque le raccordement aval des appareils est réalisé par l'avant de la cellule, de faire passer les câbles par la partie supérieure de ladite cellule. Cette solution permet également, d'effectuer ce raccordement aval des appareils par l'arrière, en faisant passer des câbles par l'arrière de la cellule, ce qui est favorisé par le fait que la hauteur utile utilisée de la cellule est relativement peu importante.

En outre, cette disposition en carré des quatres phases réduit sensiblement les effets de champs magnétique à proximité de la cellule.

## Revendications

1. Agencement de barres dans une armoire électrique comprenant un premier jeu (3) de barres (3a à 3d) d'alimentation véhiculant une ou plusieurs phases, chaque phase comportant une ou plusieurs barres, un second jeu (4) de barres (4a à 4d) s'étendant perpendiculairement aux barres (3a à 3d) du premier jeu (3), lesdites barres du second jeu (4) étant alignées dans un même plan P et destinées à être raccordées électriquement aux appareils (6) d'une unité de départ (2) d'une cellule électrique (C), chacune des barres (3a à 3d) du premier jeu (3) étant reliée électriquement à au moins une barre de même phase du second jeu (4) de barres par l'intermédiaire d'une pièce de liaison (11), **caractérisé en ce que** les barres (3a à 3d) du premier jeu (3) sont réparties de part et d'autre du plan P contenant le second jeu de barres (4), et sont situées au voisinage de l'une des extrémités desdites barres (4a à 4d) du second jeu (4), les deux jeux de barres (3,4) étant regroupés au voisinage de la paroi de fond (8) de la cellule (C).

2. Agencement selon la revendication 1, **caractérisé en ce que** les barres du premier jeu (3) sont horizontales, tandis que les barres du second jeu (4) sont verticales.

3. - Agencement selon l'une quelconque des revendications précédentes, **caractérisé en ce que** le premier jeu (3) comprend quatre phases horizontales (3a,3b,3c,3d), à savoir deux phases (3a,3b) disposées d'un côté du plan précité P et deux phases (3c,3d) disposées du côté opposé.

4. Agencement selon l'une quelconque des revendications précédentes, **caractérisé en ce que** les barres présentent une section rectangulaire.

5. - Agencement selon l'une quelconque des revendications précédentes, **caractérisé en ce que** les barres (3a,3b) ou (3c,3d) situées d'un même côté du plan P contenant les barres (4a à 4d) du second jeu (4), sont situées à plat dans un plan parallèle audit plan P contenant le second jeu (4).

6. - Agencement selon la revendication 5, **caractérisé en ce que** la distance (d) séparant d'une part le plan des barres du premier jeu (3), et d'autre part, le plan (P) contenant le second jeu de barre (4), est constante.

7. - Agencement selon l'une quelconque des revendications 1 à 6, **caractérisé en ce que** les pièces de liaison (11) comprennent des équerres.

8. - Cellule électrique comprenant un agencement de barres selon l'une quelconque des revendications 1 à 7.

## Claims

1. A bar arrangement in an electrical cabinet comprising a first set (3) of power supply bars (3a to 3d) conveying one or more phases, each phase comprising one or more bars, a second set (4) of bars (4a to 4d) extending perpendicularly to the bars (3a to 3d) of the first set (3), said bars of the second set (4) being aligned in the same plane P as one another and designed to be electrically connected to the apparatuses (6) of a feeder unit (2) of an electrical cabinet (C), each of the bars (3a to 3d) of the first set (3) being electrically connected to at least one bar (4a to 4d) of the same phase of the second set (4) by means of a connecting part (11), **characterized in that** the bars (3a to 3d) of the first set (3) are arranged on each side of the plane P containing the second set (4) and are situated near to one of the ends of said bars (4a to 4d) of the second set (4), the two sets of bars (3,4) being grouped together close to the back panel (8) of the cabinet (C).

2. The arrangement according to claim 1, **characterized in that** the bars of the first set (3) are horizontal whereas the bars of the second set (4) are vertical.

3. The arrangement according to either one of the foregoing claims, **characterized in that** the first set (3) comprises four horizontal phases (3a,3b,3c,3d), i.e. two phases (3a,3b) arranged on one side of the above-mentioned plane P and two phases (3c,3d) arranged on the opposite side thereof.

4. The arrangement according to any one of the foregoing claims, **characterized in that** the bars present a rectangular cross-section.

5. The arrangement according to any one of the foregoing claims, **characterized in that** the bars (3a,3b) or (3c,3d) situated on the same side of the plane P containing the bars (4a to 4d) of the second set (4) are situated flat in a plane parallel to said plane P containing the second set (4).

6. The arrangement according to claim 5, **characterized in that** the distance (d) separating on the one hand the plane of the bars of the first set (3) and on the other hand the plane (P) containing the second set of bars (4) is constant.

7. The arrangement according to any one of claims 1 to 6, **characterized in that** the connecting parts (11) comprise brackets.

8. An electrical cabinet comprising a bar arrangement according to any one of claims 1 to 7.

## Patentansprüche

1. Stromschienenanordnung in einem Schaltschrank, die ein erstes Sammelschienensystem (3) mit Energiezuführungsschienen (3a bis 3d) und einem oder mehreren Leitersträngen, welche Leiterstränge jeweils aus einer oder mehreren Schienen bestehen, sowie ein rechtwinklig zu den Schienen (3a bis 3d) des ersten Sammelschienensystems (3) angeordnetes zweites Sammelschienensystem (4) mit Schienen (4a bis 4d) umfasst, wobei die genannten Schienen des zweiten Sammelschienensystems (4) in der gleichen Ebene P fluchtend nebeneinander angeordnet sind und dazu dienen, elektrisch an die Schaltgeräte (6) eines Abgangsfelds einer Schaltzelle (10) angeschlossen zu werden, und wobei jede Schiene (3a bis 3d) des ersten Sammelschienensystems (3) über ein Verbindungselement (11) mit mindestens einer phasengleichen Schiene (4a bis 4d) des zweiten Sammelschienensystems (4) elektrisch verbunden ist, **dadurch gekennzeichnet, dass** die Schienen (3a bis 3d) des ersten Sammelschienensystems (3) auf beiden Seiten der, das zweite Sammelschienensystem (4) enthaltenden Ebene P angeordnet sind und in der Nähe eines der Enden der genannten Schienen (4a bis 4d) des zweiten Sammelschienensystems (4) verlaufen, so dass die beiden Sammelschienensysteme (3, 4) in der Nähe der Rückwand (8) der Schaltzelle (C) räumlich zusammengefasst sind.

2. Anordnung nach Anspruch 1, **dadurch gekennzeichnet, dass** die Schienen des ersten Sammelschienensystems (3) horizontal und die Schienen des zweiten Sammelschienensystems (4) vertikal angeordnet sind.

3. Anordnung nach irgendeinem der vorhergehenden Ansprüche, **dadurch gekennzeichnet, dass** das erste Sammelschienensystem (3) vier horizontale Leiterstränge (3a, 3b, 3c, 3d) umfasst, und zwar zwei auf einer Seite der Ebene P angeordnete Leiterstränge (3a, 3b) sowie zwei auf der gegenüber liegenden Seite der Ebene P angeordnete Leiterstränge (3c, 3d).

4. Anordnung nach irgendeinem der vorhergehenden Ansprüche, **dadurch gekennzeichnet, dass** die Stromschienen einen Rechteckquerschnitt aufweisen.

5. Anordnung nach irgendeinem der vorhergehenden Ansprüche, **dadurch gekennzeichnet, dass** die auf jeweils einer Seite der die Schienen (4a bis 4d) des zweiten Sammelschienensystems (4) enthaltenden Ebene P angeordneten Schienen (3a, 3b) bzw. (3c, 3d) flachkant in einer Ebene liegen, die parallel zu der genannten, das Sammelschienensystem (4) enthaltenden Ebene P verläuft.

6. Anordnung nach Anspruch 5, **dadurch gekennzeichnet, dass** der Abstand (d) zwischen der Ebene, in der die Schienen des ersten Sammelschienensystems (3) liegen, und der Ebene (P), die das Sammelschienensystem (4) enthält, konstant ist.

7. Anordnung nach irgendeinem der Ansprüche 1 bis 6, **dadurch gekennzeichnet, dass** die Verbindungselemente (11) Winkel umfassen.

8. Schaltzelle mit einer Stromschienenanordnung nach irgendeinem der Ansprüche 1 bis 7.
